# EUROPÄISCHE PATENTSCHRIFT

(11) **EP 1 001 327 B1**
(45) Veröffentlichungstag und Bekanntmachung des Hinweises auf die Patenterteilung: **12.03.2003**
(21) Anmeldenummer: 99203639.2
(22) Anmeldetag: 04.11.1999
(51) Int. Cl.: G05D 23/02, F24D 19/10

(54) **Aufsatz für ein Ventil, insbesondere Heizungsventil**
Attachement for a radiator valve
Accessoire pour soupape de chauffage

(30) Priorität: 16.11.1998 DE 19852654
(43) Veröffentlichungstag der Anmeldung: 17.05.2000
(73) Patentinhaber: Danfoss A/S, 6430 Nordborg (DK)
(72) Erfinder: Lolk, Soeren, 8362 Hoerning (DK)
(74) Vertreter: Knoblauch, Andreas, Dr.-Ing.

(56) Entgegenhaltungen:
- DE-A- 2 355 914
- DE-A- 3 142 741
- US-A- 3 711 060
- US-A- 3 762 638

## Beschreibung

Die Erfindung bezieht sich auf einen Aufsatz für ein Ventil, insbesondere Heizkörperventil, mit einem Gehäuse, das einen Sockel zur Anbringung am Ventil aufweist, und einem Stellglied, das über einen zweiarmigen Hebel auf ein zur Betätigung des Ventilstößels bestimmtes Ausgangselement wirkt.

Unter diese Gattung fallen beispielsweise Winkel-Thermostat-Aufsätze, wie sie aus DE 195 10 530 C2 bekannt sind. Hier stehen die Achsen des Stellgliedes und des Sockels senkrecht zueinander. Es wird ein Winkelhebel verwendet, der mit seinem zweiten Arm unmittelbar am Ventilstößel anliegt. Um die Regelgenauigkeit zu verbessern, sind am Winkelhebel die Anlageflächen für das Stellglied und für den Ventilstößel mit Auflagekanten versehen. Bei einem solchen Aufsatz kann die Höhe in Richtung der Sockelachse kleingehalten werden.

Aus DE 195 34 181 A1 ist eine Ferneinstelleinvorrichtung, insbesondere für eine Heizeinrichtung, bekannt, bei der ein als Wellrohr ausgebildetes Stellglied mit einem Zugkopf verbunden ist, der zusammen mit einem Kapillarrohr durch ein Leerrohr gezogen und am Einsatzort in eine Fassung des Ventilgehäuses eingesetzt werden kann. Weil hier das Wellrohr und eine ihm entgegenwirkende Feder hintereinander geschaltet sind, ergibt sich eine verhältnismäßig große Höhe des mit dem Aufsatz versehenen Ventils.

Weiterhin offenbart Dokument DE-A-2 355 914 einen Aufsatz für ein Ventil, insbesondere Heizkörperventil, mit einem Gehäuse, das einen Sockel zur Anbringung am Ventil aufweist, und einem Stellglied, das über einen zweiarmigen Hebel auf ein zur Betätigung des Ventilstößels bestimmtes Ausgangselement wirkt, wobei zwischen Hebel und Ausgangselement eine etwa senkrecht zur Sockelachse verlaufende Druckfläche vorgesehen ist und die Druckfläche stirnseitig an einem Druckschuh verläuft, der im Gehäuse längs der Sockelachse geführt ist.

Der Erfindung liegt die Aufgabe zugrunde, einen Aufsatz der eingangs beschriebenen Art anzugeben, der eine höhere Lebensdauer des Ventils ermöglicht.

Diese Aufgabe wird erfindungsgemäß dadurch gelöst, daß zwischen Hebel und Ausgangselement eine etwa senkrecht zur Sockelachse verlaufende Druckfläche vorgesehen ist.

Diese Konstruktion beruht auf der Erkenntnis, daß die Bewegung des Ausgangselements, wenn es direkt am Hebel ausgebildet ist, eine geringe Radialkomponente hat, die sich als Radialkraft auf den Ventilstößel überträgt. Hierdurch wird die Ventilstößeldichtung, normalerweise ein O-Ring, der gegenüber radialen Kräften sehr empfindlich ist, stark beansprucht und deshalb rasch undicht. Schaltet man jedoch zwischen Hebel und Ausgangselement die beanspruchte Druckfläche, so entfallen diese radialen Beanspruchungen ganz oder teilweise. Die Lebensdauer wird erhöht.

Günstig ist es, daß die Druckfläche stirnseitig an einem Druckschuh verläuft, der im Gehäuse längs der Sockelachse geführt ist. Auf diese Weise werden radiale Belastungen des Ventilstößels völlig verhindert.

Hierbei empfiehlt es sich, daß das Ausgangselement mittig am Druckschuh angebracht ist. Dies ergibt eine sehr einfache Konstruktion.

Mit besonderem Vorteil verläuft die Stellgliedachse parallel zur Sockelachse. Dies erlaubt es, nicht nur die Abmessung in Richtung der Sockelachse, sondern auch quer dazu gering zu halten. Üblicherweise ist neben dem Sockel eines Ventilaufsatzes ausreichend Platz.

Von Vorzug ist es, daß das Stellglied einen Druckraum aufweist und eine dem Druck entgegenwirkende Feder mit der Sockelachse gleichachsig ist. Die Anordnung von Stellglied und Feder in zwei verschiedenen Achsen erlaubt es, die Bauhöhe nochmals zu verringern.

Insbesondere ist die Feder im Innern des Druckschuhs angeordnet. Dabei wird kein zusätzlicher Platz benötigt.

Des weiteren ist es günstig, daß das Stellglied ein Wellrohr aufweist, das im Gehäuse axial geführt ist. Selbst dann, wenn radiale Kräfte auf das Wellrohr ausgeübt werden, kann dieses nicht verlagert oder zerstört werden.

Bei einer erfindungsgemäßen Ausführungsform ist dafür gesorgt, daß das Gehäuse ein Basisteil aufweist, das den Sockel, eine Führung für den Druckschuh und das Zapfenlager für den Hebel trägt. Ein solches einteiliges Basisteil erleichtert den Zusammenbau. Das Basisteil sorgt dafür, daß der Abstand zwischen dem Zapfenlager und dem in der Sockelmitte befindlichen Ventilstößel konstant ist und daher eine hohe, nicht durch ein Spiel - wie bei an der Haube angebrachten Zapfenlager - beeinträchtigte Genauigkeit aufrechterhalten werden kann.

Des weiteren ist es günstig, daß das Stellglied Teil einer Ferneinstellvorrichtung ist, die über ein Kapillarrohr mit Druck versorgt wird und an einem Zugkopf befestigt ist, der am Gehäuse fixierbar ist. Gerade für solche Ferneinstellvorrichtungen ist der erfindungsgemäße Aufsatz besonders geeignet, weil keine Rücksicht auf ein Einstellelement genommen zu werden braucht und daher das Stellglied so günstig wie möglich untergebracht werden kann.

Im einfachsten Fall ist am Basisteil eine Fassung zur Aufnahme des Zugkopfes vorgesehen. Dies erlaubt einen einfachen Zusammenbau am Einbauort.

Des weiteren ist es vorteilhaft, daß das Gehäuse eine Haube aufweist, die das Basisteil abdeckt und eine Führung für das Stellglied trägt. Diese Haube umkleidet alle wesentlichen Teile des Aufsatzes und übernimmt die Führung des Stellgliedes, wenn dieses nach oben aus einer Fassung herausragt.

Des weiteren ist es günstig, daß die Haube Anschläge zur Sicherung der Lage des Hebelzapfens trägt. Auf diese Weise kann auch die Lagerung des Hebels gesichert werden.

Von Vorteil ist es auch, daß das Gehäuse zumindest teilweise aus reibungsarmem Material besteht. Dies reduziert Reibungsverluste zumindest an Druckschuh und Wellrohr.
Die Erfindung wird nachstehend anhand eines in der Zeichnung dargestellten, bevorzugten Ausführungsbeispiels näher beschrieben. Hierin zeigen:
- Fig. 1: eine räumliche Darstellung eines am Ventil montierten Aufsatzes gemäß der Erfindung mit zur Hälfte weggeschnittener Haube,
- Fig. 2: eine schematische Explosionsdarstellung des Aufsatzes und
- Fig. 3: eine Draufsicht auf das Basisteil des Aufsatzes.

Der veranschaulichte Aufsatz 1 ist mit seinem Sockel 2 auf ein Ventilgehäuse 3 aufgesetzt und dort mit einer Schraube 4 gesichert. Das Ventil kann insbesondere ein Heizungsventil sein, könnte aber auch anderen Zwecken dienen. Aus dem Ventilgehäuse 3 ist ein Ventilstößel 5 herausgeführt, der eine Dichtung 6, insbesondere eine sogenannte "Stopfbuchse", durchsetzt.

Ein Stellglied 7 in der Form eines Wellrohres 9 wird über ein Kapillarrohr 8 mit Druck von einer nicht veranschaulichten Einstellvorrichtung her versorgt. Das Betätigungsende des Stellgliedes 9 wirkt auf einen Arm 10 eines zweiarmigen Hebels 11, der um einen Zapfen 12 schwenkbar ist. Der andere Arm 13 ruht auf einem Druckschuh 14, der Topfform hat, an seiner Stirnseite eine Druckfläche 15 trägt, an seinem zylindrischen Umfang 16 geführt ist, einstückig mit einem Ausgangselement 17 verbunden ist, das mit dem Ventilstößel 5 zusammenwirkt, und eine Schraubenfeder 18 umschließt, die der durch den Druck im Stellglied 7 erzeugten Kraft entgegengesetzt wirkt. Die Achse 19 des Sockels 2 und damit auch die Achse des Druckschuhs 14, des Ausgangselements 17 und der Feder 18, sowie die Achse 20 des Stellgliedes 7 verlaufen parallel zueinander.

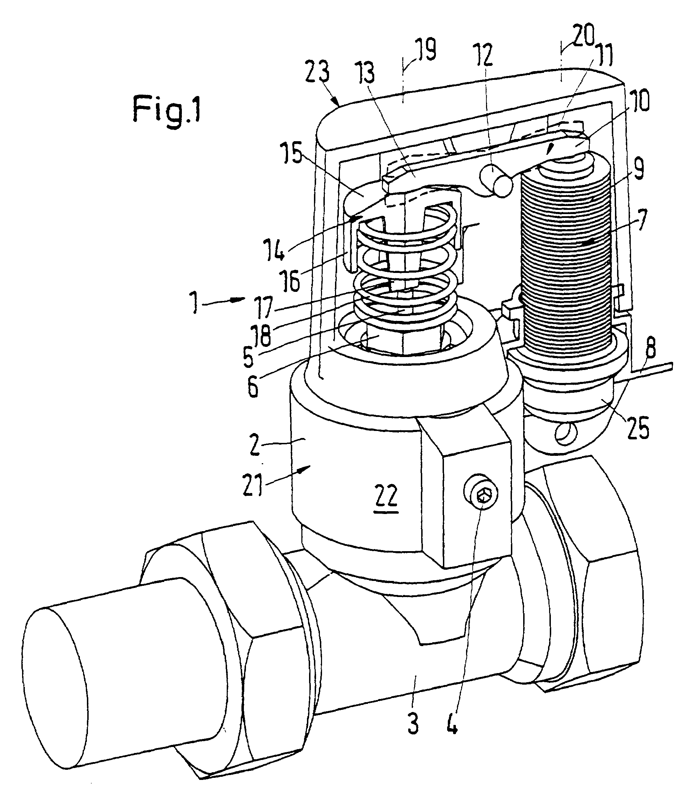

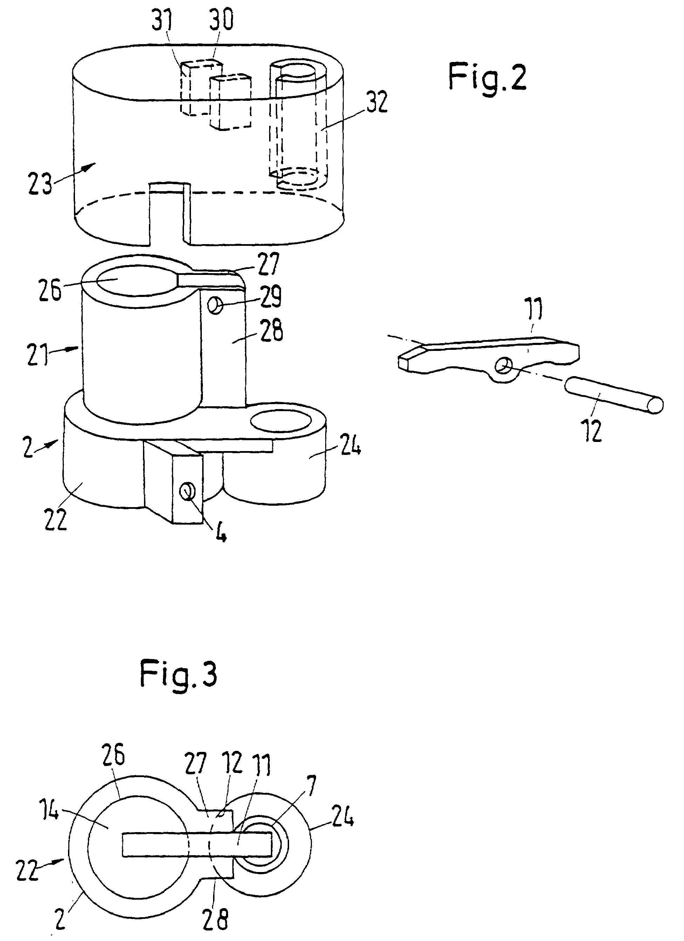

Weitere Einzelheiten, die nicht alle in Fig. 1 dargestellt sind, ergeben sich aus den Fig. 2 und 3. Der Aufsatz 1 weist ein Gehäuse 21 mit einem Basisteil 22 und einer Haube 23 auf. Am Basisteil 22 ist außer dem Sockel 2 eine Fassung 24 vorgesehen, in die von unten her das Stellglied 7 eingeschoben und dann mittels eines Zugkopfes 25 am Basisteil 22 befestigt werden kann. Die Befestigung des Zugkopfes 25 an der Fassung 24 kann in gleicher Weise wie in der DE 195 34 181 A1 beschrieben, ausgestaltet sein, beispielsweise als Bajonettverschluß. Man kann dann die bekannten Ferneinstellvorrichtungen wahlweise auch in der Fassung 24 anordnen.

Das Basisteil 22 trägt ferner eine zylindrische Führung 26 für den Druckschuh 14. Zwei Wände 27 und 28 nehmen dem Hebel 11 zwischen sich auf und weisen Zapfenlager 29 auf, durch die der Lagerzapfen 12 für den Hebel 11 steckbar ist.

Die Haube 23 trägt an ihrer Stirnseite innen zwei Anschläge 30 und 31. Diese greifen beim Aufsetzen der Haube über die beiden Stirnenden des Zapfens 12, also über die Außenseiten der Wände 27, 28 und sichert dadurch die Lage des Zapfens 12. Ferner trägt die Haube 23 an der Innenseite der Stirnfläche eine Führung 32 für das Wellrohr 7.

Wenn beim Verschwenken des Hebels 11 der Arm 13 eine radial Bewegungskomponente vollführt, ist dies ohne schwerwiegende Bedeutung, weil der Arm 13 auf der Druckfläche 15 gleiten kann. Eventuell hierbei auf den Druckschuh 14 übertragene Radialkräfte wirken nicht auf den Ventilstößel 5, weil der Druckschuh 14 im Gehäuse 21 geführt ist. Radialkräfte, die auf das Wellrohr 7 übertragen werden, sind ebenfalls unschädlich, da das Wellrohr in einer Führung 32 gehalten ist. Es kann daher auch nicht geschehen, daß das Wellrohr 9, wenn es auf den Hebel 11 drückt, seitlich ausweicht oder bricht. Durch die parallele Anordnung von Sockelachse 19 und Stellgliedachse 20 und die Verlagerung der Feder 18 in den Bereich der Sockelachse 19 erreicht man, daß der Aufsatz sowohl in der Höhe als auch in der Breite nur geringe Abmessungen hat. Hierbei wird auch ausgenutzt, daß unter anderem aufgrund der Rohranschlüsse zu beiden Seiten des den Sockel aufnehmenden Ventilteil ausreichend Platz zur Verfügung steht.

Von den dargestellten Ausführungsbeispielen kann in vielfacher Hinsicht abgewichen werden, ohne den Grundgedanken der Erfindung zu verlassen. So brauchen die Führungen 26 und 32 nicht aus geschlossenen Wänden zu bestehen. Es genügt die Abstützung an einigen Umfangsstellen. Auch eine Führung an anderer Stelle als dem Umfang kommt in Betracht. Auch kann statt der Feder 18, die als Schraubenfeder dargestellt ist, eine andere Feder, beispielsweise eine Torsionsfeder, wie eine Wäscheklammerfeder, verwendet werden, von der der eine Teil direkten Kontakt zum Hebel und der andere Teil direkten Kontakt zum Gehäuse hat.

## Patentansprüche

1. Aufsatz für ein Ventil, insbesondere Heizkörperventil, mit einem Gehäuse (21), das einen Sockel (2) zur Anbringung am Ventil aufweist, und einem Stellglied (7), das über einen zweiarmigen Hebel (11) auf ein zur Betätigung des Ventilstößels (5) bestimmtes Ausgangselement (17) wirkt, wobei zwischen Hebel (11) und Ausgangselement (17) eine etwa senkrecht zur Sockelachse (19) verlaufende Druckfläche (15) vorgesehen ist und die Druckfläche (15) stirnseitig an einem Druckschuh (14) verläuft, der im Gehäuse (21) längs der Sockelachse (19) geführt ist, **dadurch gekennzeichnet, daß** das Gehäuse (21) ein einteiliges Basisteil (22) aufweist, das den Sockel (2), eine Führung (26) für den Druckschuh (14) und das Zapfenlager (29) für den Hebel (11) trägt.

2. Aufsatz nach Anspruch 1, **dadurch gekennzeichnet, daß** das Ausgangselement (17) mittig am Druckschuh (14) angebracht ist.

3. Aufsatz nach einem der Ansprüche 1 bis 2, **dadurch gekennzeichnet, daß** die Stellgliedachse (20) parallel zur Sockelachse (19) verläuft.

4. Aufsatz nach einem der Ansprüche 1 bis 3, **dadurch gekennzeichnet, daß** das Stellglied (7) einen Druckraum aufweist und eine dem Druck entgegenwirkende Feder (18) mit der Sockelachse (19) gleichachsig ist.

5. Aufsatz nach Anspruch 4 , **dadurch gekennzeichnet, daß** die Feder (18) im Innern des Druckschuhs (14) angeordnet ist.

6. Aufsatz nach einem der Ansprüche 1 bis 5, **dadurch gekennzeichnet, daß** das Stellglied (7) ein Wellrohr (9) aufweist, das im Gehäuse (21) axial geführt ist.

7. Aufsatz nach einem der Ansprüche 1 bis 6, **dadurch gekennzeichnet, daß** das Stellglied (7) Teil einer Ferneinstellvorrichtung ist, die über ein Kapillarrohr (8) mit Druck versorgt wird und an einem Zugkopf (25) befestigt ist, der am Gehäuse (21) fixierbar ist.

8. Aufsatz nach Anspruch 7, **dadurch gekennzeichnet, daß** am Basisteil (22) eine Fassung (24) zur Aufnahme des Zugkopfes (25) vorgesehen ist.

9. Aufsatz nach einem der Ansprüche 1 bis 8, **dadurch gekennzeichnet, daß** das Gehäuse (21) eine Haube (23) aufweist, die das Basisteil (22) abdeckt und eine Führung (32) für das Stellglied (7) trägt.

10. Aufsatz nach Anspruch 9, **dadurch gekennzeichnet, daß** die Haube (23) Anschläge (30, 31) zur Sicherung der Lage des Hebelzapfens (12) trägt.

11. Aufsatz nach einem der Ansprüche 1 oder 2, **dadurch gekennzeichnet, daß** das Gehäuse (21) zumindest teilweise aus reibungsarmem Material besteht.

## Claims

1. Element for a valve, particularly a radiator valve, with a housing (21), having a socket (2) for mounting on the valve, and with an regulating unit (7), acting via a two-armed lever (11) upon an outlet element (17) meant for activating the valve tappet (5), a pressure area (15) being provided between the lever (11) and the outlet element (17), said pressure area (15) extending approximately perpendicular to the socket axis (19) and along the front of a pressure shoe (14), which is guided in the housing (21) along the socket axis (19), **characterised in that** the housing (21) has a one-piece base unit (22), which carries the socket (2), a guide (26) for the pressure shoe (14) and the bearing (29) for the lever (11).

2. Element according to claim 1, **characterised in that** the outlet element (17) is arranged centrally on the pressure shoe (14).

3. Element according to claim 1 or 2, **characterised in that** the regulating unit axis (20) extends parallel to the socket axis (19).

4. Element according to one of the claims 1 to 3, **characterised in that** the regulating unit (7) has a pressure chamber and that a spring (18) counteracting the pressure has the same axis as the socket (19).

5. Element according to claim 4, **characterised in that** the spring (18) is arranged inside the pressure shoe (14).

6. Element according to one of the claims 1 to 5, **characterised in that** the regulating unit (7) has a corrugated pipe (9), which is guided axially in the housing (21).

7. Element according to one of the claims 1 to 6, **characterised in that** the regulating unit (7) is part of a remote control device, which is supplied with pressure via a capillary tube (8) and fixed on a draw head (25), which can be fixed on the housing (21).

8. Element according to claim 7, **characterised in that** a fitting (24) is arranged on the base part (22) for accommodating the draw head (25).

9. Element according to one of the claims 1 to 8, **characterised in that** the housing (21) has a cover (23), which covers the base part (22) and carries a guide (32) for the regulating unit (7).

10. Element according to claim 9, **characterised in that** the cover (23) has stops (30, 31) to secure the position of the lever pin (12).

11. Element according to one of the claims 1 or 2, **characterised in that** at least partly, the housing (21) is made of a low-friction material.

## Revendications

1. Capuchon pour une soupape, notamment pour une soupape à corps chaud, comportant un boîtier (1), qui possède un socle (2) pour le montage sur la soupape, et un organe de réglage (7), qui agit au moyen d'un levier à deux bras (11) sur un élément de sortie (17) destiné à actionner le poussoir de soupape (5), et dans lequel il est prévu entre le levier (11) et l'élément de sortie (17), une surface de pression (15) qui est approximativement perpendiculaire à l'axe (19) du socle, et la surface de pression (15) s'étend frontalement sur un patin de pression (14), qui est guidé dans le boîtier (21) le long de l'axe (19) du socle, **caractérisé en ce que** le boîtier (21) comporte une partie de base d'un seul tenant (22), qui porte le socle (2), un guide (26) pour le patin de pression (14) et le palier (29) de tourillonnage du levier (11).

2. Capuchon selon la revendication 1, **caractérisé en ce que** l'élément de sortie (17) est monté en position centrée sur le patin de pression (14).

3. Capuchon selon l'une des revendications 1 et 2, **caractérisé en ce que** l'axe (20) de l'organe de réglage est parallèle à l'axe (19) du socle.

4. Capuchon selon l'une des revendications 1 à 3, **caractérisé en ce que** l'organe de réglage (7) comporte une chambre de pression et qu'un ressort (18), qui s'oppose à la pression, possède un axe confondu avec l'axe (19) du socle.

5. Capuchon selon la revendication 4, **caractérisé en ce que** le ressort (18) est disposé à l'intérieur du patin de pression (14).

6. Capuchon selon l'une des revendications 1 à 5, **caractérisé en ce que** l'organe de réglage (7) possède un tube ondulé (9), qui est guidé axialement dans le boîtier.

7. Capuchon selon l'une des revendications 1 à 6, **caractérisé en ce que** l'organe de réglage (7) fait partie d'un dispositif de réglage à distance, qui est alimenté en pression par l'intermédiaire d'un tube capillaire (8) et est fixé à une tête de traction (25) qui peut être fixée sur le boîtier (21).

8. Capuchon selon la revendication 7, **caractérisé en ce qu'**il est prévu, sur la partie de base (22), une monture (24) destinée à recevoir la tête de traction (25).

9. Capuchon selon l'une des revendications 1 à 8, **caractérisé en ce que** le boîtier (21) comporte un capot (23), qui recouvre la partie de base (22) et comporte un guide (32) pour l'organe de réglage (7).

10. Capuchon selon la revendication 9, **caractérisé en ce que** le capot (23) comporte des butées (30,31) pour bloquer la position du tourillon (12) du levier.

11. Capuchon selon l'une des revendications 1 ou 2, **caractérisé en ce que** le boîtier (21) est constitué au moins en partie par un matériau à faible coefficient de frottement.
